# EUROPEAN PATENT SPECIFICATION

(11) **EP 3 601 742 B1**
(45) Date of publication and mention of the grant of the patent: **10.09.2025**
(21) Application number: 18717176.4
(22) Date of filing: 22.03.2018
(51) Int. Cl.: F01D 9/02, F02B 37/02

(54) **DUAL VOLUTE TURBOCHARGER WITH ASYMMETRIC TONGUE-TO-WHEEL SPACING**
TURBOLADER MIT DOPPELSPIRALE MIT ASYMMETRISCHEM ZUNGE-ZU-RAD-ABSTAND
TURBOCOMPRESSEUR À DOUBLE VOLUTE AYANT UN ESPACEMENT ASYMÉTRIQUE DE LANGUETTE À ROUE

(30) Priority: 24.03.2017 US 201762476174 P
(43) Date of publication of application: 05.02.2020
(73) Proprietor: BorgWarner Inc., Auburn Hills, MI 48326 (US)
(72) Inventor: COMEAU, Charles, Auburn Hills, Michigan 48326 (US); COLONT, Craig, Candler North Carolina 28715 (US); COLLEY, Matt, Arden North Carolina 28704 (US)
(74) Representative: Peterreins Schley
(86) International application number: PCT/US2018/023691
(87) International publication number: WO 2018/175678

(56) References cited:
- WO-A1-2014/140598
- DE-A1- 102013 223 778
- GB-A- 2 062 116
- US-A1- 2007 227 142
- US-A1- 2015 013 330

## Description

### FIELD OF THE INVENTION

In a multi-cylinder internal combustion engine, in which cylinders are fired sequentially, the exhaust ports, through which the energy for driving a turbine wheel is provided, are opened at different times. When an exhaust port initially opens, a surge of gas is expelled from the cylinder. This high-energy short-duration pulse is of great value in driving the turbine of an exhaust gas turbocharger. Next, as the exhaust port closes, the pressure in the manifold is diminished. In engines equipped with a single manifold, the high-energy pulse from one cylinder traveling down the manifold may meet and combine with the low pressure wave from another cylinder, canceling the pressure pulse. This reduction in the amplitude of the peak pulse pressure reduces turbine driving efficiency.

An improved technique for driving a turbine wheel is known as "pulse charging". The engine exhaust system is divided into two or more exhaust manifolds, each of which is connected to a different set of cylinders, and these independent manifolds feed an internally-divided turbine housing. Thereby, at least first and second flow streams, derived from different groups of cylinders, are kept separated all the way from cylinder exhaust port to turbine wheel, and the high-energy pulses in one manifold are not diminished by interaction with the low pressure waves in the other manifold.

The internally divided housing of a dual volute turbine forms channels, each of which terminating with a so-called tongue. Account has to be taken of the fact that this tongue at least partially prevents optimum flow against the turbine wheel. The tongue conceals a part of the turbine wheel, and flow cannot be directed directly against this part of the turbine wheel. In the case of two channels, there are two such tongues adversely affecting the optimum flow against the turbine wheel. While it might seem desirable for aerodynamic purposes to form the tongue with a slender tip, there is a countervailing requirement for a sufficient thickness to ensure a certain level of endurance strength.

Another problem is that pulse charged turbocharger turbine wheels are exposed to highly unsteady aerodynamic forces, which cause substantial blade vibrations. Aerodynamic blade excitation forces are the main reason for high cycle fatigue of the turbine wheels in turbocharger turbines.

Yet another problem is noise generated by the turbine blades passing the nozzle vanes. The amplitude of the pulse emitted when a blade of the turbine wheel passes by the tongue may translate into noise. This pulse energy may also introduce stresses on the tongue. The tongue is a feature of the turbine housing that is prone to cracking and failure due to thermal stresses and high cycle fatigue, and these pressure pulses introduce additional forces that may accelerate fatigue failure of the tongue.

WO2015179353 (BorgWarner) teaches that, whereas conventionally the tip of the tongue of a first channel is arranged 180° circumferentially offset from the tip of the tongue of a second channel, inventively the risk of blade fatigue failure can be reduced by shortening the circumferential angular offset by at least 5°. However, the problems of nozzle or tongue failure are not addressed, and further improvement in turbine wheel life is desired.

US2007/0227142A1 discloses an exhaust gas turbocharger for an internal combustion engine having a volute or spiral turbine housing and a compressor housing where a turbine rotor and a compressor impeller are connected with one another by a common shaft. An adjustable directional flow control valve uses boost pressure from the compressor to timely actuate a piston and lever connected to a pivotal flow control gate or a signal from an engine control module (ECM) can be directed to a hydraulic, pneumatic or electrical actuator having a reciprocatable control rod connected to the flow control gate.

US2015/0013330A1 discloses an internal combustion engine comprising a dual flow turbocharger and including an annular support with at least one tongue-like end wherein the annular support is adjustable in a translational fashion along the turbines axis of rotation. Moving the annular support influences the degree of separation behavior of turbine channels by varying a tongue spacing to the rotor. DE102013223778A1 discloses a further turbocharger comprising a dual-volute turbine casing.

It is an object of the present invention to specify an exhaust-gas turbocharger which, along with cost-effective production and low-maintenance operation, allows pulse charging, is simultaneously compact and can be used in passenger and commercial vehicles.

### SUMMARY OF THE INVENTION

The present invention refers to a turbocharger as defined in claim 1. The dependent claims refer to preferred embodiments of the turbocharger of claim 1. The above-described problems are also solved by providing a respective turbocharger with at least first and second separate flow paths, terminating in first and second guide tongues. The gap between the first guide tongue and turbine wheel is smaller than the gap between the second guide tongue and turbine wheel. A tongue-to-gap ratio (TGR) of the second guide tongue, measured as wheel-to-tongue gap at the closest point divided by a turbine wheel diameter, is selected from the range 0.15 - 0.04. This tongue asymmetry allows for control of the pulse amplitude emitted when a blade of the turbine wheel passes by each respective tongue.

The thermodynamic performance of radial and mixed flow turbine stages is increased with the smaller turbine wheel-to-tongue distance at the first guide tongue due to the ability to reduce the leakage of the flow around the turbine wheel as well as being able to harness a greater amount of the energy peaks from flow pulsations emitted by the engine. For maximum thermodynamic performance, the first guide tongue is placed as close as possible to the turbine wheel.

To improve turbine wheel durability, the distance between the second guide tongue and the turbine wheel is made greater than the first, thereby preventing synchronous or otherwise sympathetic responses in the turbine wheel due to the wheel rotating past each tongue.

By increasing the wheel-to-tongue distance of only the second guide tongue, durability requirements can be met, while on the other hand the performance of the first volute terminating in the first tongue would not be needlessly negatively impacted.

The two tongues of a dual volute turbine can either be used as-cast or can be machined to their final shape and placement. The wheel-to-tongue distance of the second tongue can be varied from the first tongue directly in the cast shape, or it can be varied through finish machining operations.

Accordingly, this invention is directed to the design of a low-cost turbine flow control device capable of maintaining exhaust gas velocity and pulse energy. The low cost turbocharger is matched to low flow regimes to provide optimized turbo (and thus engine) transient response for low flow while being capable of delivering the high flows demanded by the engine in other than low flow conditions, in the same, cost-effective turbocharger.

### BRIEF DESCRIPTION OF THE FIGURES

The present invention is illustrated by way of example and not limitation in the accompanying drawings in which like reference numbers indicate similar parts, and in which:
- Fig. 1: provides an overview of the exhaust gas flow to the exhaust turbine of the turbocharger;
- Fig. 2: illustrates a first embodiment of the invention with a dual entry turbine housing, and
- Fig. 3: illustrates a second embodiment of the invention with a divided turbine housing.

### DETAILED DESCRIPTION OF THE INVENTION

Pulse charged turbines are well known. US Patent 8,621,863 (KRÄTSCHMER et al) shows in Fig. 5 a schematic representation of an internal combustion engine fitted with a turbocharger. In principle, the internal combustion engine may be a diesel, an SI or a diesel/SI engine; in the illustrated embodiment, it has six cylinders, of which cylinders a first set of three are combined to form a first cylinder group and a second set of three cylinders are combined to form a second cylinder group. The two exhaust gas lines are assigned to the respective cylinder groups, the first exhaust gas line being coupled to the first spiral passage of the turbocharger, which is designed as a partial volute, via suitable manifolds, while the second exhaust gas line is coupled to the second spiral passage designed as a full volute.

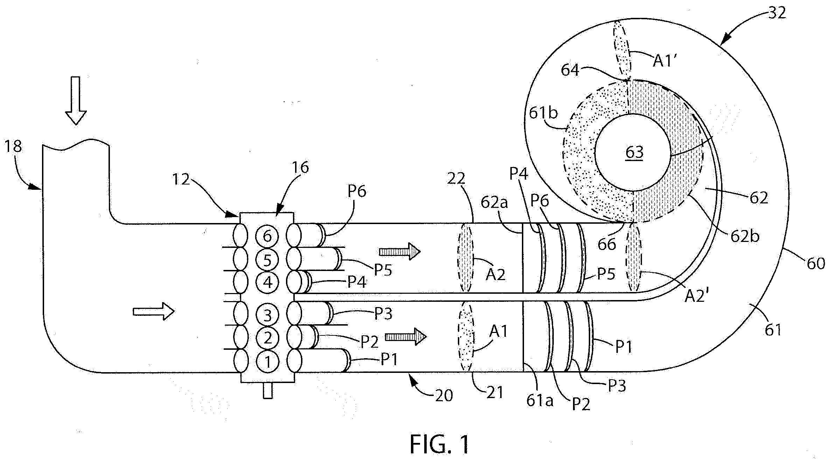

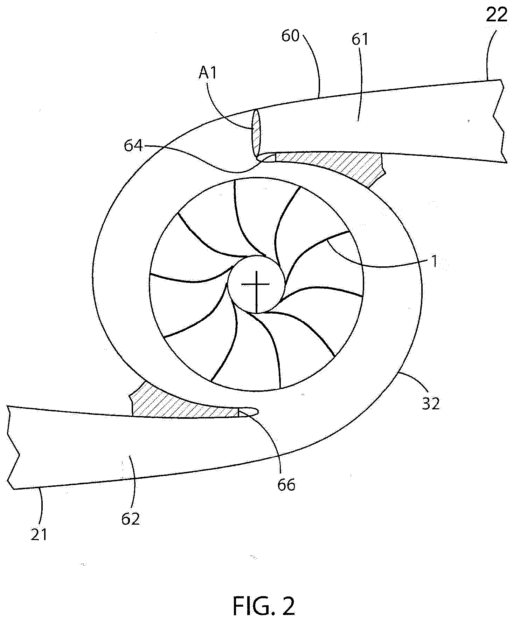

Fig. 1 of the present application is adapted from Fig. 2 of US Application Publication 20160025044. Fig. 1 provides an overview of the exhaust gas flow to the exhaust turbine 32 of the turbocharger. The internal combustion engine 12 system includes an intake passageway 18 and exhaust manifold 20. The intake passageway 18 is in fluid communication with the combustion chambers 16 to supply intake air to the combustion chambers 16. The exhaust manifold 20 is in fluid communication with the combustion chambers 16 to receive exhaust gas discharged through exhaust ports to the outside of the combustion chambers 16.

Exhaust flow from cylinders #1, #2 and #3 of the combustion chambers 16 is physically separated from the exhaust flow from cylinders #4, #5 and #6 of the combustion chambers 16. In particular, the exhaust gas from the cylinders #1, #2 and #3 of the combustion chambers 16 flow into the first exhaust pipe 21, while the exhaust gas from the cylinders #4, #5 and #6 of the combustion chambers 16 flow into the second exhaust pipe 22. While the engine 12 is running, exhaust gas pulses P1 to P6, which are produced as the exhaust valves open and close, propagate out from the cylinders #1, #2, #3, #4, #5 and #6, respectively. Exhaust pulse interference conventionally occurs when the exhaust gas pulses from one cylinder meet the low pressure wave from another cylinder. By separating the exhaust gas from the cylinders #1, #2, #3, #4, #5 and #6 into the first and second exhaust pipes 21, 22, as discussed above, the exhaust turbine 32 can efficiently utilize exhaust scavenging techniques, which improves turbine system performance and reduces turbo lag.

The exhaust turbine 32 of the turbocharger has a turbine housing 60 having a first volute 61, a second volute 62 and a turbine wheel receiving bore 63 (also known as a base circle). The first volute 61 has a first volute exhaust gas inlet 61*a* with a cross sectional area A1. Here, the first volute exhaust gas inlet 61*a* receives a stream of commingled exhaust gases from the cylinders #1, #2 and #3. The first volute 61 has a first exhaust gas outlet 61*b* with a cross sectional area A1' at the beginning of the first exhaust gas outlet 61*b*, which extends circumferentially from a tip or free end of a first tongue 64 to a tip or free end of a second tongue 66 in a counterclockwise direction as illustrated in Fig. 1. The second volute 62 has a second exhaust gas inlet 62*a* with a cross sectional area A2. Here, the second exhaust gas inlet 62*a* receives a stream of commingled exhaust gases from the cylinders #4, #5 and #6. The second volute 62 has a second exhaust gas outlet 62*b* with a cross sectional area A2' at the beginning of the second exhaust gas outlet 62*b,* which extends circumferentially from the tip end of a second tongue 66 to the tip end of the first tongue 64 in a counterclockwise direction as illustrated in Fig. 1. The cross sectional areas A1 and A2 of the first and second volutes 61 and 62 can be substantially the same. Alternatively, the cross sectional area A2 of the second volute 62 can be smaller than the cross sectional area A1 of the first volute 61.

As diagrammatically illustrated in Fig. 1, the first exhaust gas outlet 61*b* opens circumferentially along 180 degrees of the turbine receiving bore 63, while the second exhaust gas outlet 62b circumferentially opens along the remaining 180 degrees of the turbine receiving bore 63.

In accordance with the present invention, a turbocharger is provided with at least first and second separate flow paths, terminating at second and first guide tongues. The gap between the first guide tongue and turbine wheel is smaller than the gap between the second guide tongue and turbine wheel. This tongue asymmetry allows for control of the pulse amplitude emitted when a blade of the turbine wheel passes by each respective tongue.

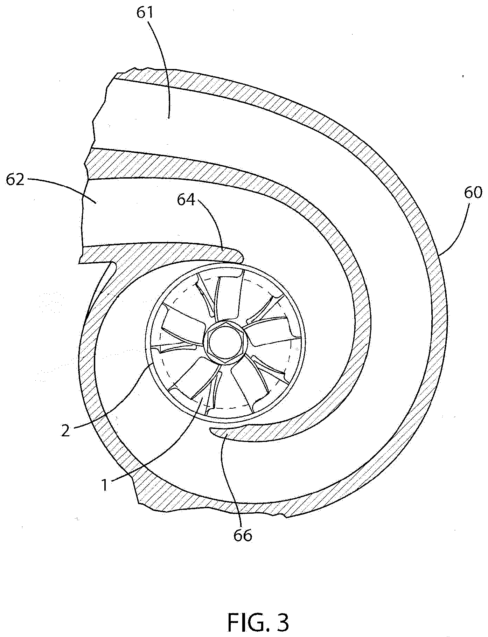

The turbine housing consists of a plurality (two or more) of volutes 61, 62 configured such that the exits of each volute are arranged around the base circle of the turbine housing. The volutes cumulatively deliver exhaust air to the circumference 2 of the turbine wheel 1 as shown in Fig. 3.

The typical method to define tongue gap is the wheel-to-tongue gap at the closest point divided by the wheel diameter (measured at radially outer tips of the turbine wheel).. For example, a 3mm gap divided by a 53mm wheel diameter = 3/53 = 5.6% or 0.056 tongue gap ratio (TGR). The dual volute pulse effect tapers off as the tongue gap increases. The TGR of the larger gap is selected in the range 0.15 - 0.04. preferably in the range 0.1 - 0.05, more preferably in the range 0.8 - 0.05, most preferably 0.7- 0.6. The TGR of the closer gap may be selected in the range 0.8 - 0.1, preferably 0.7 - 0.2, more preferably 0.6 - 0.3, most preferably 0.5 - 0.4. The ratio of the larger TGR to the smaller TGR may be from 1.5 to 4, preferably 2-3.

The asymmetric tongue spacing can be used in a turbocharger with symmetric or with asymmetric volutes. It can be used in a turbocharger with EGR. It can be used in a turbocharger with variable turbine geometry (VTG). The essential feature of the present invention is the asymmetric tongue-to-wheel spacing. It can be used in a dual entry turbine wherein an actuator is used for selectively controlling the flow of exhaust gases from the inlet to a second scroll while maintaining flow of such gases to a first scroll, as disclosed for example in U.S. Pat. No. 4,389,845 (Koike). See Fig. 9B in which an actuator controls a valve which controls the flow into the first or second and first volutes formed by a solid divider wall. The asymmetric tongue spacing can also be used with either radial flow turbines or "mixed flow" radial/axial turbines (see US 2007/0180826).

As an alternative to varying the tongue-to-wheel distance between first and second tongues, it is also possible to varying the nozzle width of the first volute relative to the second volute.

This method of asymmetry involving varying the nozzle width of the first volute from the second volute allows for an adjustment of the flow quantity between both volutes. This method could be used to equalize the turbine inlet pressure of both cylinder groups. This could be used to counteract the asymmetry found in the cylinder head designs. For example, in a situation where the nozzle width of the first volute and the second volute are equal the turbine inlet pressure could be measured in each volute (and so in each cylinder pairing). In this example the pressure entering the second volute is below the target for operation on the engine. The nozzle width of the second volute could be decreased to decrease the flow through the second volute and to increase the turbine inlet pressure.

Decreasing the flow in one volute could be useful for increasing the low end torque and transient performance potential of a turbine stage. A lower flowing turbine stage can provide more power to the compressor stage at lower engine flows and engine RPM which enables for more aggressive low end torque and transient operation.

This method could be used to create unequal flow between cylinder groups which would create an unequal turbine inlet pressure in each volute. In a situation where the nozzle width of a first volute and nozzle width of a second volute are symmetric the turbine inlet pressure could be measured in each volute (and so in each cylinder pairing) and be found to be equal. For purposes of driving HP-EGR the nozzle width of the second volute could be reduced to increase the turbine inlet pressure ahead of the second volute. Increasing the turbine inlet pressure of the second volute would enable the turbo/engine system to drive HP-EGR without impacting the pumping loop/VE of the cylinder grouping of the first volute.

## Claims

1. A turbocharger, comprising:
a turbine wheel (1), and
a turbocharger turbine housing (60) in the form of a spiral casing having at least first and second volutes (61, 62) defining separate flow paths to a turbine wheel bore (63), the turbine wheel bore (63) adapted to receive the turbine wheel (1) having a turbine wheel circumference (2), the flow paths ending with first and second fixed guide tongues (64, 66), wherein a gap between the first guide tongue (64) and the turbine wheel circumference (2) is smaller than a gap between the second guide tongue (66) and the turbine wheel circumference (2),
**characterized in that** a tongue-to-gap ratio (TGR) of the second guide tongue (66), measured as wheel-to-tongue gap at the closest point divided by a turbine wheel diameter, is selected from the range 0.15 - 0.04.

2. The turbocharger as claimed in claim 1, wherein the first and second volutes are asymmetric.

3. The turbocharger as claimed in claim 2, wherein one of the at least first and second volutes is connected to an exhaust gas recirculation line.

4. The turbocharger as claimed in claim 1, wherein the turbine housing houses a variable geometry turbine.

5. The turbocharger as claimed in claim 1, wherein the first and second guide tongues (64, 66) have first and second tongue tips, and wherein the first tongue tip is offset 180° circumferentially from the second tongue tip.

6. The turbocharger as claimed in claim 1, wherein the first and second guide tongues (64, 66) have first and second tongue tips, and wherein the first tongue tip is offset 165° - 177° circumferentially from the second tongue tip.

7. The turbocharger as claimed in claim 1, wherein the TGR of the second guide tongue (66) is selected from the range 0.1 - 0.05.

## Patentansprüche

1. Turbolader, umfassend:
ein Turbinenrad (1) und
ein Turbolagerturbinengehäuse (60) in Form eines spiralförmigen Gehäuses mit mindestens einer ersten und zweiten Spirale (61, 62), die getrennte Strömungsbahnen zu einer Turbinenradbohrung (63) definieren, wobei die Turbinenradbohrung (63) dazu eingerichtet ist, das Turbinenrad (1) mit einem Turbinenradumfang (2) aufzunehmen, wobei die Strömungsbahnen mit einer ersten und zweiten fixierten Führungszunge (64, 66) enden, wobei ein Spalt zwischen der ersten Führungszunge (64) und dem Turbinenradumfang (2) kleiner ist als ein Spalt zwischen der zweiten Führungszunge (66) und dem Turbinenradumfang (2),
**dadurch gekennzeichnet, dass** ein Zunge-Spalt-Verhältnis (TGR) der zweiten Führungszunge (66), am nächsten Punkt als Rad-Zunge-Spalt gemessen und durch einen Turbinenraddurchmesser geteilt, aus dem Bereich von 0,15-0,04 ausgewählt ist.

2. Turbolader nach Anspruch 1, wobei die ersten und zweiten Spiralen asymmetrisch sind.

3. Turbolader nach Anspruch 2, wobei eine der mindestens ersten und zweiten Spiralen mit einer Abgasrückführleitung verbunden ist.

4. Turbolader nach Anspruch 1, wobei das Turbinengehäuse eine variable Turbinengeometrie hat.

5. Turbolader nach Anspruch 1, wobei die ersten und zweiten Führungszungen (64, 66) erste und zweite Zungenspitzen aufweisen und wobei die erste Zungenspitze um 180° in Umfangsrichtung von der zweiten Zungenspitze versetzt ist.

6. Turbolader nach Anspruch 1, wobei die ersten und zweiten Führungszungen (64, 66) erste und zweite Zungenspitzen aufweisen und wobei die erste Zungenspitze um 165°-177° in Umfangsrichtung von der zweiten Zungenspitze versetzt ist.

7. Turbolader nach Anspruch 1, wobei das TGR der zweiten Führungszunge (66) aus dem Bereich 0,1-0,05 ausgewählt ist.

## Revendications

1. Turbocompresseur, comprenant :
une roue de turbine (1), et
une carcasse de turbine de turbocompresseur (60) sous la forme d'un carter en spirale ayant au moins des premier et second volutes (61, 62) définissant des chemins d'écoulement séparés jusqu'à un alésage de roue de turbine (63), l'alésage de roue de turbine (63) étant adapté pour recevoir la roue de turbine (1) ayant une circonférence de roue de turbine (2), les chemins d'écoulement se terminant avec des première et seconde languettes de guidage fixes (64, 66), dans lequel une lacune entre la première languette de guidage (64) et la circonférence de roue de turbine (2) est plus petit qu'une lacune entre la seconde languette de guidage (66) et la circonférence de roue de turbine (2),
**caractérisé en ce qu'**un rapport languette-lacune (TGR) de la seconde languette de guidage (66), mesuré sous la forme d'une lacune roue-languette au point le plus près divisé par un diamètre de roue de turbine, est sélectionné dans la plage de 0,15 à 0,04.

2. Turbocompresseur tel que revendiqué la revendication 1, dans lequel les premier et second volutes sont asymétriques.

3. Turbocompresseur tel que revendiqué la revendication 2, dans lequel un des au moins premier et second volutes est relié à une conduite de recirculation de gaz d'échappement.

4. Turbocompresseur tel que revendiqué la revendication 1, dans lequel la carcasse de turbine loge une turbine de géométrie variable.

5. Turbocompresseur tel que revendiqué la revendication 1, dans lequel les première et seconde languettes de guidage (64, 66) ont des premier et second bouts de languette, et dans lequel le premier bout de languette est décalé de 180° circonférentiellement par rapport au second bout de languette.

6. Turbocompresseur tel que revendiqué la revendication 1, dans lequel les première et seconde languettes de guidage (64, 66) ont des premier et second bouts de languette, et dans lequel le premier bout de languette est décalé de 165° à 177° circonférentiellement par rapport au second bout de languette.

7. Turbocompresseur tel que revendiqué la revendication 1, dans lequel le TGR de la seconde languette de guidage (66) est sélectionné dans la plage de 0,1 à 0,05.
